# DEMANDE DE BREVET EUROPEEN

(11) **EP 1 933 079 A1**
(43) Date de publication de la demande: **18.06.2008**
(21) Numéro de dépôt: 06126169.9
(22) Date de dépôt: 14.12.2006
(51) Int. Cl.: F21K 7/00, B32B 17/10, H01L 25/075, H05B 33/08, C03C 17/245, C03C 23/00

(54) **Panneau lumineux**

(71) Demandeur: AGC Flat Glass Europe SA, 1170 Bruxelles (BE)
(72) Inventeur: La désignation de l'inventeur n'a pas encore été déposée
(74) Mandataire: Decamps, Alain René François

(57) **Abrégé**

Panneau lumineux comprenant plusieurs éléments différents formés d'un substrat rigide en verre, d'une matière plastique et de diodes électroluminescentes (LEDs), dans lequel l'ensemble des éléments est laminé en une structure complètement fermée, étanche par rapport à l'atmosphère extérieure.

## Description

La présente invention concerne un panneau lumineux comprenant un substrat en verre, une matière plastique et des diodes électroluminescentes dans une structure fermée n'interférant pas avec l'atmosphère extérieure.

On connaît un dispositif d'éclairage comprenant un panneau de support transparent en verre revêtu de bandes conductrices de l'électricité sur lesquelles sont montées des diodes électroluminescentes émettant leur lumière au travers du support transparent (brevet US 6,270,236 B1).

Dans ce dispositif, des microorganismes peuvent cependant s'immiscer à l'intérieur de la structure, entre les diodes et le support transparent, ainsi qu'à la surface des diodes et du support. De ce fait, le dispositif connu n'est pas adapté pour un usage dans un milieu qui requiert des conditions d'asepsie.

L'invention remédie à cet inconvénient en fournissant un panneau lumineux qui ne favorise pas le maintien en vie et le développement de microorganismes.

A cet effet, l'invention concerne un panneau lumineux tel que défini dans la revendication 1.

Les revendications dépendantes définissent d'autres formes possibles de réalisation de l'invention, dont certaines sont préférées.

Outre l'absence d'interférence avec l'atmosphère extérieure déjà mentionné, l'invention peut aussi apporter un ou plusieurs des avantages suivants :
- facilité accrue de nettoyage du panneau ;
- incorporation aisée dans tout type de luminaire ;
- coût d'entretien fortement diminué ;
- étanchéité aux liquides ;
- étanchéité aux microorganismes ;
- durée de vie très longue.

Selon l'invention, le panneau lumineux comprend plusieurs éléments différents formés d'au moins un substrat en verre. Par substrat rigide en verre on entend ici un corps plein en verre de forme plate, c'est-à-dire de faible épaisseur comparée à ses autres dimensions et de résistance mécanique aux sollicitations de flexion et de torsion suffisante pour ne pas se déformer sous l'action de sollicitations extérieures que l'on rencontre couramment dans le milieu ambiant dans lequel on utilise généralement le panneau. Le substrat peut se présenter sous la forme d'une plaque rigide en verre constituée d'une feuille unique ou au contraire être le résultat d'un assemblage de plusieurs feuilles ou plaques différentes collées ou soudées les unes aux autres. Les feuilles de verre transparentes, au moins aux longueurs d'ondes du spectre de la lumière visible, sont préférées. Les verres inorganiques ou les matières plastiques transparentes rigides telles que le polycarbonate, encore appelées verres organiques peuvent constituer le substrat. Parmi ces verres, les verres inorganiques traditionnels sont préférés, en particulier les verres sodo-calciques. De préférence, le substrat comprend au moins une feuille de verre inorganique. Des substrats comprenant au moins deux feuilles de verre inorganique sont préférés.

Selon l'invention, un élément supplémentaire au substrat en verre inorganique est une matière plastique qui n'appartient pas à la catégorie des verres organiques. Cette dernière matière plastique peut se présenter sous forme de corps plein de forme plate, comme le substrat en verre. Elle peut prendre la forme d'une feuille semi-rigide ou souple, ou encore de plusieurs feuilles soudées les unes aux autres ou d'une pluralité de feuilles non contigües réparties dans le panneau. Selon leur position par rapport aux éléments émettant la lumière dans le panneau, il convient parfois que cette matière plastique soit au moins transparente au rayonnement appartenant aux longueurs d'onde du spectre de la lumière visible. La matière plastique est choisie parmi celles qui sont habituellement utilisées pour les produits laminés, en particulier pour les verres laminés. En pratique, on peut choisir la matière plastique parmi les polyesters thermoplastiques, par exemple le polyvinylbutyral, les copolymères d'éthylène et d'acétate de vinyle et les polyéthylènetéréphtalates.

Le panneau lumineux conforme à l'invention comprend aussi des éléments émetteurs de lumière formés par une multitude de diodes électroluminescentes (LED's) qui génèrent des radiations lumineuses. Par radiations lumineuses, on entend aussi bien celles qui appartiennent au spectre visible que celles qui sont extérieures à celui-ci. Ces radiations peuvent être parfaitement monochromatiques ou, au contraire, se distribuer sur une ou plusieurs bandes de fréquences, contiguës ou non. Les longueurs d'onde des radiations lumineuses émises peuvent aussi être étrangères à celles peuplant le spectre visible, éventuellement avec des radiations appartenant à ce spectre. Ce sont par exemple des diodes LED émettant dans le spectre visible, des diodes UV et/ou visible et/ou IR. Les radiations lumineuses générées par les LED's ont une longueur d'onde comprise entre 200 nm et 1 mm. De préférence, les radiations lumineuses sont des radiations appartenant au spectre visible. Les radiations lumineuses peuvent aussi avantageusement comprendre au moins une partie du spectre visible et au moins une partie du spectre infrarouge et/ou ultraviolet.

Selon l'invention, l'ensemble des éléments constitués par le substrat rigide en verre, la matière plastique et les LED's sont laminés ensemble en une structure complètement fermée. Cette structure peut avoir été scellée. Avantageusement, le panneau peut être réalisé avec l'ensemble de ses surfaces extérieures en verre.

Un premier mode de réalisation du panneau selon l'invention est celui dans lequel il est formé d'un panneau monobloc dans lequel la matière plastique est constituée d'une ou de plusieurs feuilles d'une matière plastique laminée avec au moins une feuille de verre. Dans ce mode de réalisation, on préfère que le panneau comprenne deux feuilles de verre sur ses faces externes en contact chacune avec l'atmosphère extérieure au panneau et enserrant la matière plastique et les LED's en leur intérieur.

Un autre mode de réalisation du panneau conforme à l'invention, qui est compatible avec le premier mode de réalisation, est celui dans lequel les LED's sont laminées à l'interface d'au moins une feuille de verre et d'une feuille de matière plastique. Avantageusement, les LED's ont été laminées avec la matière plastique de manière telle qu'elles se situent complètement à l'intérieur de la feuille de cette matière qui est choisie avec une épaisseur d'au moins 10 % supérieure à celle des diodes et pouvant aller jusqu'à 50 % supérieure à celle des diodes. En cas de feuille de matière plastique d'épaisseur insuffisante, il est possible de laminer ensemble un empilage de plusieurs de ces feuilles de manière à dépasser d'au moins 10 % l'épaisseur des LED's.

Un autre mode de réalisation compatible aussi avec les modes précédents consiste à alimenter les LED's en énergie électrique via un réseau de fils conducteurs laminés dans la matière plastique. Alternativement, les LED's peuvent aussi être alimentées via une couche électro conductrice recouvrant la feuille de verre sur laquelle elles reposent, à l'interface de celle-ci avec la matière plastique. Des pistes formant des chemins de courant d'alimentation des LED's peuvent avoir été découpées dans cette couche conductrice par l'action d'un rayon laser qui brûle la couche sur une faible largeur, réalisant ainsi des sillons non conducteurs qui délimitent les pistes dans le reste de la couche.

Un autre mode de réalisation intéressant du panneau lumineux selon l'invention est encore celui d'un vitrage multiple et scellé comprenant un espace interne fermé rempli d'un gaz inerte exempt d'humidité ou un espace interne dans lequel règne un vide plus ou moins poussé. Les LED's se trouvent alors généralement situées dans l'espace interne du vitrage multiple. Dans ce mode de réalisation, les doubles vitrages sont préférés. Une au moins des vitres du vitrage multiple peut très bien elle-même constituer un panneau laminé qui peut aussi comprendre des LED's. Ces dernières peuvent remplacer, en tout ou en partie les LED's situées dans l'espace interne au vitrage multiple.

Un autre mode de réalisation intéressant du panneau lumineux selon l'invention est encore celui dans lequel le panneau complètement fermé est rendu aseptique vis-à-vis des microorganismes par tout traitement de stérilisation connu. Par microorganismes, on entend les organismes généralement peu ou non visibles à l'oeil nu comme les êtres vivants unicellulaires que sont les bactéries, les virus, certaines algues et les spores de moisissures ainsi que les êtres vivants multicellulaires de très petite taille tels que les protozoaires, les nématodes, certains insectes et les lichens. Le panneau lumineux conforme à l'invention est aussi étanche par rapport à ces microorganismes et ne favorise pas leur maintien en vie ni leur développement. A cette fin, le panneau lumineux se présente de préférence sous la forme d'un corps composite dont les surfaces extérieures sont lisses et ne permettent pas aux microorganismes de s'accrocher ni de s'abriter.

Une variante intéressante aux modes de réalisation du panneau conforme à l'invention explicités plus haut consiste à faire subir au panneau un traitement apte à le rendre antiseptique vis-à-vis des microorganismes. Toute méthode permettant de rendre le panneau antiseptique peut convenir a priori, par exemple son enduction au moyen d'une composition chimique antiseptique. De préférence, cette composition antiseptique est une couche dure pyrolitique comprenant du dioxyde de titane qui a été déposée sur la surface du verre en contact avec l'atmosphère externe au panneau. Alternativement, la composition antiseptique est une composition enduisant la surface du verre en contact avec l'atmosphère externe au panneau qui comprend au moins un composé chimique à propriétés antiseptiques utilisé dans les processus de stérilisation. De préférence, le composé chimique à propriétés antiseptiques est sélectionné parmi au moins un des produits suivants : anion hypohalogénite, halogénure mercurique, éthanol, isopropanol et peroxyde d'hydrogène, un composé antibiotique, un composé fongicide et un composé pesticide.

## Revendications

1. Panneau lumineux comprenant plusieurs éléments différents formés d'au moins un substrat rigide en verre, d'au moins une matière plastique et de diodes électroluminescentes (LED's), **caractérisé en ce que** l'ensemble des éléments est laminé en une structure complètement fermée et étanche par rapport à l'atmosphère extérieure.

2. Panneau lumineux selon la revendication précédente, **caractérisé en ce qu'**il constitue un panneau laminé monobloc dans lequel la matière plastique est constituée d'une ou de plusieurs feuilles d'une matière plastique laminée avec au moins une feuille de verre.

3. Panneau lumineux selon la revendication précédente, **caractérisé en ce qu'**il comprend deux feuilles de verre sur ses faces externes en contact chacune avec l'atmosphère extérieure au panneau et enserrant la matière plastique et les LED's en leur intérieur.

4. Panneau lumineux selon une quelconque des revendications précédentes, **caractérisé en ce que** les LED's sont laminées à l'interface d'une feuille de verre et d'une feuille de matière plastique.

5. Panneau lumineux selon la revendication précédente, **caractérisé en ce que** l'alimentation des LED's est réalisée via un réseau de fils conducteurs laminés dans la matière plastique.

6. Panneau lumineux selon la revendication 4, **caractérisé en ce que** les LED's sont alimentées via une couche électro conductrice recouvrant la feuille de verre sur laquelle elles reposent, à l'interface de celle-ci avec la matière plastique.

7. Panneau lumineux selon la revendication précédente, **caractérisé en ce que** des pistes ont été découpées dans la couche électro conductrice, qui forment des chemins de courant d'alimentation des LED's.

8. Panneau lumineux selon la revendication 1 ou 2, **caractérisé en ce qu'**il constitue une structure de vitrage multiple comprenant un espace interne fermé rempli de gaz ou dans lequel règne un vide.

9. Panneau lumineux selon une quelconque des revendications précédentes, **caractérisé en ce que** la matière plastique est un polyester thermoplastique.

10. Panneau lumineux selon la revendication précédente, **caractérisé en ce que** le polyester est choisi parmi le polyvinylbutyral, les copolymères d'éthylène et d'acétate de vinyle et les polyéthylènetéréphtalates.

11. Panneau lumineux selon une quelconque des revendications précédentes, **caractérisé en ce qu'**il est aseptique du point de vue des microorganismes et étanche par rapport à ces derniers.

12. Panneau lumineux selon une quelconque des revendications précédentes, **caractérisé en ce qu'**il a en outre subi un traitement apte à le rendre antiseptique vis-à-vis des microorganismes.

13. Panneau lumineux selon la revendication précédente, **caractérisé en ce que** le traitement antiseptique a consisté en son enduction au moyen d'une composition antiseptique.

14. Panneau lumineux selon la revendication précédente, **caractérisé en ce que** la composition antiseptique est une couche dure pyrolytique comprenant du dioxyde de titane et déposée sur la surface du verre en contact avec l'atmosphère externe au panneau.

15. Panneau lumineux selon la revendication 13, **caractérisé en ce que** la composition antiseptique est une composition enduisant la surface du verre en contact avec l'atmosphère externe au panneau qui comprend au moins un composé chimique à propriétés antiseptiques utilisé dans les processus de stérilisation.

16. Panneau lumineux selon la revendication précédente, **caractérisé en ce que** le composé chimique antiseptique est sélectionné parmi au moins un des produits suivants : anion hypohalogénite, halogénure mercurique, éthanol, isopropanol et peroxyde d'hydrogène, un composé antibiotique, un composé fongicide et un composé pesticide.
